# EUROPEAN PATENT SPECIFICATION

(11) **EP 0 728 599 B1**
(45) Date of publication and mention of the grant of the patent: **16.12.1998**
(21) Application number: 96301137.4
(22) Date of filing: 21.02.1996
(51) Int. Cl.: B60C 11/04, B60C 11/13

(54) **Pneumatic tyre**
Luftreifen
Bandage pneumatique

(30) Priority: 24.02.1995 JP 62043/95; 16.11.1995 JP 298612/95
(43) Date of publication of application: 28.08.1996
(73) Proprietor: SUMITOMO RUBBER INDUSTRIES LIMITED, Kobe-shi, Hyogo-ken (JP)
(72) Inventor: Uemura, Yoshiaki, Kobeshi, Hyogo-ken (JP)
(74) Representative: Stewart, Charles Geoffrey

(56) References cited:
- DE-A- 3 727 050
- US-A- 4 854 358

## Description

The present invention relates to a pneumatic tyre, more particularly to a tread which is capable of achieving a reduction in the running noise and an improvement in the aquaplaning performance at the same time.

In recent years, as automobile technology is remarkably developed, the percentage of noise from the tyres to the overall noise from the automobile is increasing. Therefore, there is a great demand for lower noise tyres.

In general, tyres are provided with circumferentially extending continuous grooves having a width of about 10 to 20 mm to provide drainage for the tread portion and to improve wet performances such as aquaplaning performance.

Such circumferential grooves, however, cause so called air tube resonance noise.

Air tube resonance noise is a resonance phenomenon of the air in a tube formed in the ground contacting patch of the tyre by being surrounded by the inner surface of a circumferential groove and the road surface. As both the circumferential ends of the tube are open, the primary mode resonance occurs at a wave length of about 2 times the tube length. In case of a passenger car tyre, the frequency thereof ranges from about 800 Hz to 1 kHz, to which human ears are most sensitive, and is substantially constant independently of the running speed.

If the circumferential grooves are decreased in volume and/or number, or the grooves are provided with blocks therein, the air resonance noise can be decreased. However, as the drainage by the grooves is then decreased, the aquaplaning performance of the tyre is greatly deteriorated.

If the number and volume of the circumferential grooves are increased, the aquaplaning performance can be improved, but the tyre noise increases. Further, as the ground contacting area decreases, the dry grip performance, tread pattern rigidity, steering stability and the like are also decreased.

It is therefore, an object of the present invention to provide a pneumatic tyre in which the air tube resonance noise is reduced without deteriorating aquaplaning performance.

According to the present invention, a pneumatic tyre comprises a tread portion provided with a pair of axially outer circumferential grooves and an axially inner circumferential groove, each extending continuously in the circumferential direction of the tyre, wherein the axially outer circumferential grooves is disposed within a ground contacting width *2 SW* of the tread portion so that the axial distance *L* of the groove centre line thereof from the tyre equator is more than 0.4 times a half *SW* of the ground contacting width, the inner circumferential groove is disposed such that the axial distance *L* of the groove centre line thereof from the tyre equator is not more than 0.4 times a half *SW* of the ground contacting width, where the ground contacting width *2 SW* measured in a standard loaded state in which the tyre is mounted on a standard rim, inflated to a standard inner pressure and loaded with a normal load, the ratio *m/n* of the axial widths *m* and *n* of the outer circumferential groove at the groove bottom and top, and respectively, being more than 0.5 but not more than 1.0, the ratio *m/n* of the axial widths *m* and *n* of the inner circumferential groove at the groove bottom and top, respectively, being more than 0 but not more than 0.5.

Here, the above-mentioned standard rim is a rim specified in the standard such as ETRTO (Europe), TRA (USA), JATMA (Japan) and the like called "measuring rim", "approved rim", "normal rim" and the like. The normal load is 88% of the maximum tyre load specified in the same standard. The standard inner pressure is also as specified in the standard.

It is preferable that the outer and inner circumferential grooves have a top width *n* of from 3 to 20 % of half the ground contacting width *SW*, and a depth of form 2.5 to 20 % of half ground the contacting width *SW*.

It is also preferable that the top width *n* of the outer circumferential grooves is larger than the top width *n* of the inner circumferential groove.

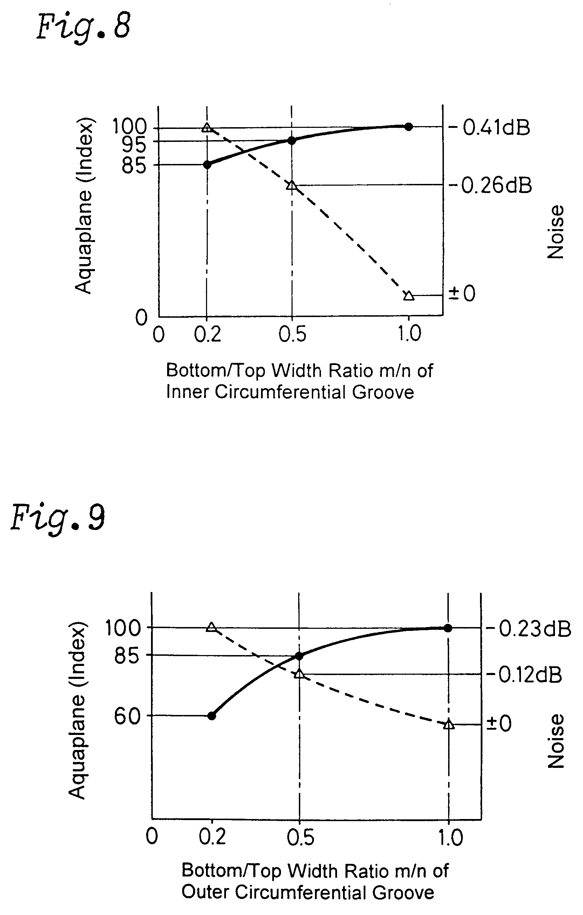

If the groove width ratio *m/n* of the outer circumferential grooves is less than 0.5, the aquaplaning performance abruptly decreases as shown in Fig.9 by a solid line.

As the ground pressure is lower in the vicinity of the outer circumferential grooves than the inner circumferential groove, the outer circumferential grooves have much effect on the aquaplaning performance. By increasing the groove width ratio *m/n* of the outer circumferential grooves, the groove volume is increased, and the aquaplaning performance is improved.

If the groove width ratio *m/n* is more than 1.0, the tread elements such as blocks, rib and the like are decreased in the wear resistance and rigidity, and as a result the durability and manoeuvrability are decreased.

Contrarily, as the ground pressure is higher in the vicinity of the inner circumferential groove than the outer circumferential grooves, the groove width ratio *m/n* of the inner circumferential groove does not have much effect on the aquaplaning performance. However, the inner circumferential groove has much effect on the pass-by noise, and as shown in Fig.8 by broken line, the pass-by noise decreases as the groove width ratio *m/n* decreases.

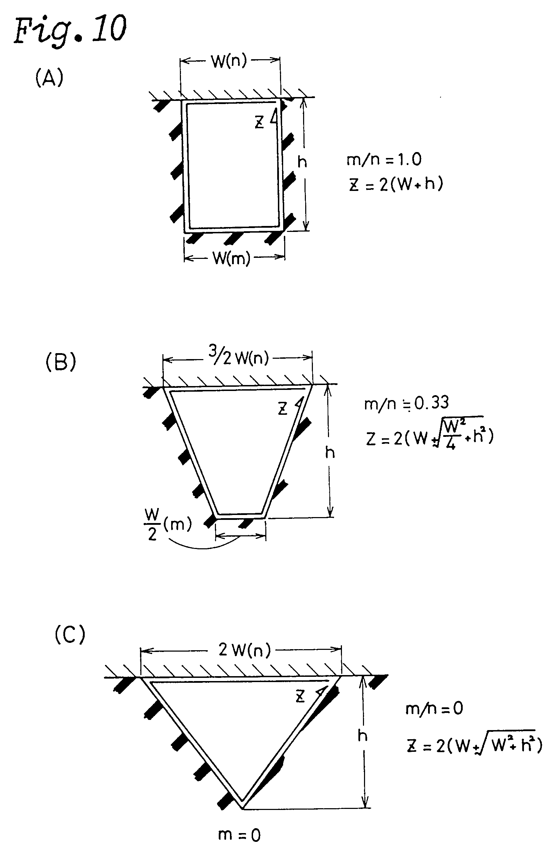

In general, as shown in Fig.10(A),(B) and (C), if the air tube closed by a groove and the road surface has the same cross sectional area (Wh), the perimeter length *Z* (developed length) of the cross section increases, as the groove width ratio *m/n* decreases. When the air in the groove or the air tube moves in the longitudinal direction, the frictional resistance increases in proportion to the increase in the perimeter length *Z*. Accordingly, without changing the groove sectional area (groove volume), by decreasing the groove width ratio *m/n*, the energy causing air resonance can be decreased to decrease the sound pressure of the pass-by noise. As explained above, even though the inner circumferential groove is decreased in the groove width ratio *m/n*, in comparison with the outer circumferential grooves, the pass-by noise can be reduced with improving the aquaplaning performance. If the groove width ratio *m/n* is more than 0.5, the reduction of the pass-by noise is very small. It is thus not preferable.

In the present invention, the groove width ratios of the inner and outer circumferential grooves are consciously differed as explained above. As a result, the improvement in the aquaplaning performance and reduction in the pass-by noise become compatible with each other.

Embodiments of the present invention will now be described in detail in conjunction with the drawings, in which:-
Fig.1 is a cross sectional view of an embodiment of the present invention;
Fig.2 shows the ground contacting region of the tread showing an example of the tread pattern;
Fig.3 is a cross sectional view of the inner circumferential groove;
Fig.4 is a cross sectional view of the outer circumferential groove;
Fig.5 is a plan view of another example of the circumferential groove;
Fig.6 is a plan view of another example of the circumferential groove;
Fig.7 is a cross sectional view showing another example of the sectional shape of the circumferential groove;
Fig.8 is a graph showing relationships between the groove width ratio of the inner circumferential groove and aquaplaning performance and pass-by noise;
Fig.9 is a graph showing relationships between the groove width ratio of the outer circumferential groove and aquaplaning performance and pass-by noise; and
Fig.10(A)-(C) are cross sectional views for explaining a relationship between the groove width ratio *m/n* and the perimeter length *Z* of the groove sectional shape.

In the Figures, a pneumatic tyre 1 according to the present invention comprises a tread portion 12, a pair of axially spaced bead portions 14 each with a bead core 15 therein, a pair of sidewall portions 13 extending between the tread edges E and the bead portions 14, a radial carcass 16 extending between the bead portions 14 through the tread portion 12 and sidewall portions 13 and turned up around the bead core 15 in the bead portion 14 from the axially inside to outside of the tyre to be secured thereto, a belt 17 disposed outside the carcass 16 and inside the tread portion 12, and a bead apex 18 disposed between the carcass main portion and turnup portion in each bead portion 14 and extending radially outwardly from the bead core 15.

The carcass 16 in this embodiment comprises a single ply of radially arranged organic fibre cords. In case of passenger car tyres, for example, polyester, nylon, rayon or the like are used.

The belt 17 comprises a plurality of plies of cords having a high-tensile-rigidity such as steel, aromatic polyamide and the like. The cords in each ply are laid at a relatively small angle of from 15 to 30 degrees with respect to the tyre circumferential direction in parallel with each other but crosswise to the cords of the other ply.

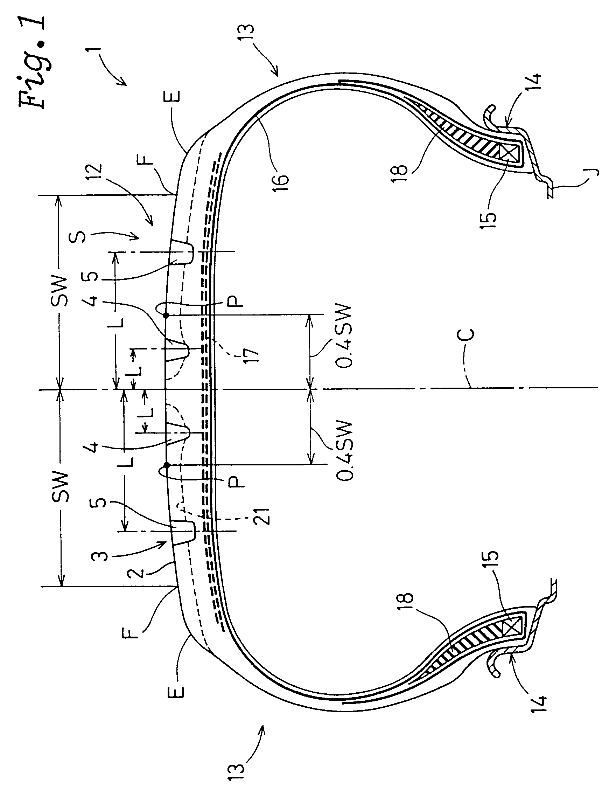

In Fig.1, the tyre 1 is mounted on a standard rim J and inflated to standard inner pressure. In a cross section thereof, the surface 2 of the tread portion 12 is defined by a convex curve having a single radius or a multi-radius. Thus, when the tyre is loaded with a normal load (= 88% of Max. load), the ground pressure of the tread portion gradually increases from the tread edges E toward the tyre equator C, defining the ground contacting width (2 SW) as the maximum axial distance between the axial edges F of the ground contacting region S.

The tread portion 12 is provided within the ground contacting width (2 SW) with at least three circumferential grooves 3 extending continuously in the circumferential direction of the tyre.

The circumferential grooves 3 comprise at least two axially outer circumferential grooves 5, each disposed on each side of the tyre equator C, and at least one axially inner circumferential groove 4 disposed axially inside thereof.

Each outer circumferential groove 5 is located such that the axial distance of the groove centre from the tyre equator is more than 0.4 times half the ground contacting width *SW*.

Each inner circumferential groove 4 is located such that the axial distance of the groove centre from the tyre equator is not more than 0.4 times half the ground contacting width *SW*.

The total number of the inner and outer circumferential grooves 4 and 5 is accordingly, not less than three, and preferably not more than seven. If the total number is less than three, the aquaplaning performance greatly decreases. If the total number is more than seven, the pass-by noise has a tendency to increase, and the ground contacting area decreases to deteriorate the wear resistance, steering stability and the like.

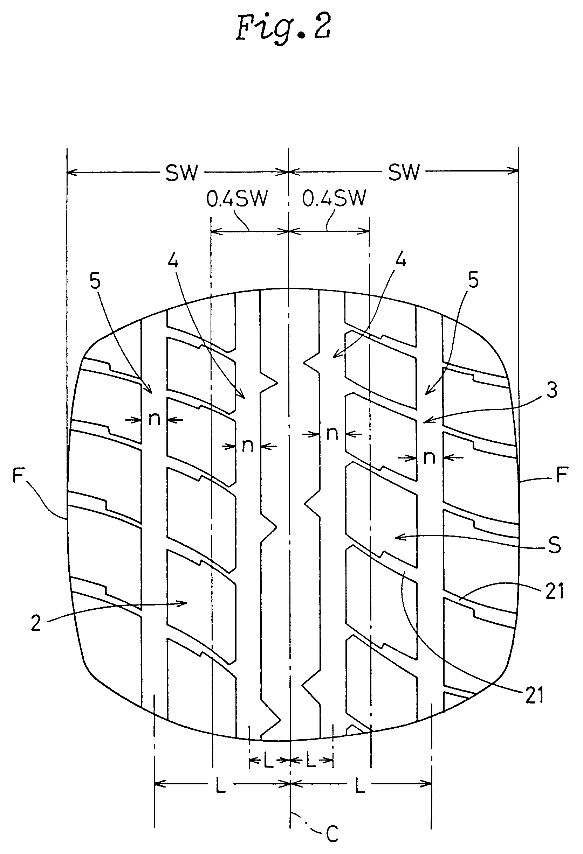

In the embodiment shown in Fig. 2, two inner circumferential grooves 4 and two outer circumferential grooves 5, each of which is a straight groove extending substantially parallel with the tyre equator C, are provided.

However, the configuration of the inner and outer circumferential grooves 4 and 5 can be modified in a non-linear one.

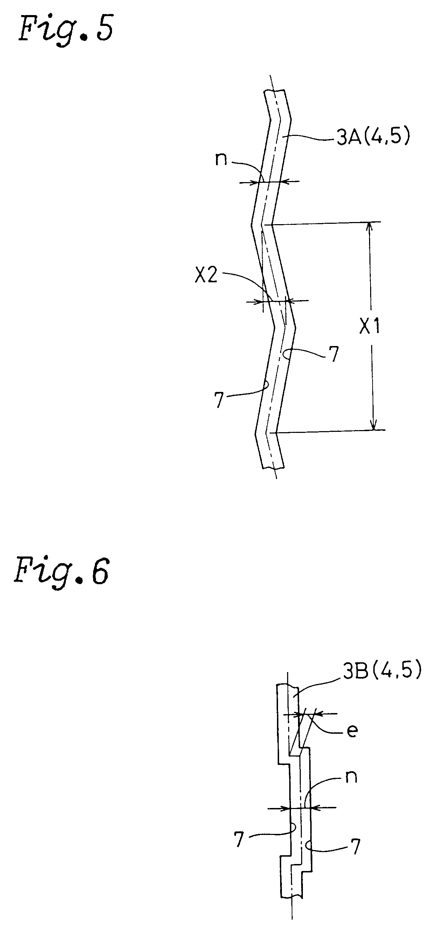

Fig.5 shows the circumferential groove 3 (4, 5) formed as a zigzag groove 3A. In case of a zigzag groove, the ratio *X2/X1* of the zigzag height *X2* to the zigzag pitch *X1* is preferably not more than 0.3. Here, the "zigzag" groove includes a wavy groove (smoothly curved configuration).

Fig.6 shows a square-wave groove 3B as a further modification of the circumferential groove 3 (4, 5). In the case of a square-wave groove 3B, the ratio (e/n) of the axial deviation or amplitude (e) of the groove centre line is preferably not more than 0.45 times the groove top width *n*.

Preferably, the tread portion 12 is further provided with axial grooves 21 extending axially of the tyre to intersect the inner and outer circumferential grooves 3 (4, 5).

In this embodiment, the axial grooves extend from each inner circumferential groove 4 to the adjacent outer circumferential groove 5, and from the outer circumferential groove 5 towards the tread edge E beyond the ground contacting area edge F. Thus, on each side of the tyre equator C, two rows of blocks are formed, but in the tread centre between the two inner grooves 4, a circumferentially continuous rib is formed.

According to the present invention, between the inner circumferential groove and the outer circumferential groove, the bottom width/top width ratio is changed.

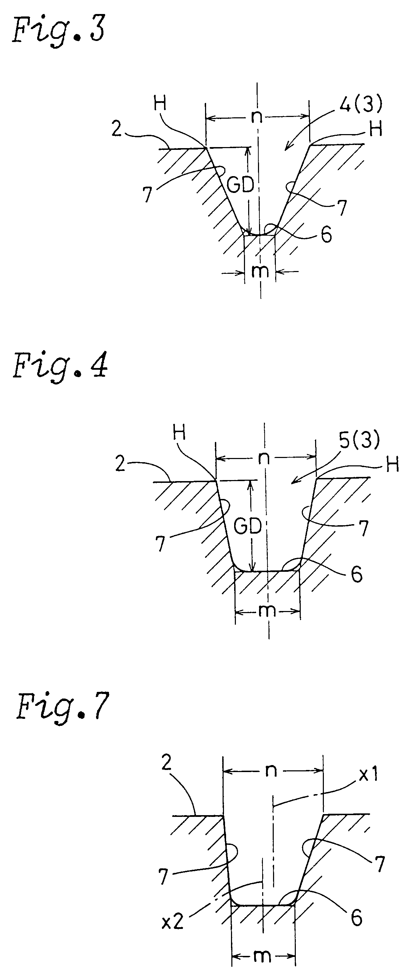

In the inner circumferential grooves 4, the ratio *m/n* of the bottom width *m* to the top width *n* is more than 0 but not more than 0.5. However, in the outer circumferential grooves 5, it is more than 0.5 but not more than 1.0, as shown in Figs. 3 and 4.

In the inner and outer circumferential grooves 4 and 5, the top width *n* is in the range of from 3 to 20% of a half ground contacting width *SW*, and the groove depth GD is in the range of from 2.5 to 20% of a half ground contacting width *SW*, whereby a required groove volume can be obtained which helps to make the aquaplaning performance being compatible with the pass-by noise.

In Figs.3 and 4, the sectional shapes of the circumferential grooves 4 and 5 are substantially symmetrical about the centre line of the groove.

However, the sectional shape can be asymmetrical. Fig.7 shows an asymmetrical sectional shape for the inner and outer circumferential grooves 3 (4, 5), wherein the inclination angle of the one sidewall 7 is differed from that of the other sidewall 7, and as a result the centre line x1 of the top width *n* is axially shifted from the centre line x2 of the bottom width *m*.

In the tyre cross section including the tyre axis, the sidewalls 7 of each of the outer and inner circumferential grooves 5 and 4 are generally straight.

The top width *n* is the axial distance between the intersections H of the sidewalls 7 with the tread surface 2.

The bottom width *m* is the axial distance between the intersections G of the sidewalls 7 with an axial straight line passing the deepest point of the bottom which usually occurs in the groove centre.

Preferably, the corners between the groove bottom and sidewalls are chamfered to prevent cracking. In this case, as the above-mentioned intersection G, that of the extension line of the sidewall 7 with the above-mentioned bottom line is used instead.

On the contrary, it is preferable that the corner between the sidewall 7 and the tread surface 2 is not chamfered. However, if it is chamfered, as is the intersection H, the extension line of the sidewall 7 with the tread surface line is used.

In Figs.3 and 4, the corners of the groove bottom 6 of the inner and outer circumferential grooves 4 and 5 are rounded. As a result, the bottom 6 of the outer circumferential groove 5 has a pair of curved portions (rounded corners) one on each side of its flat main portion. However, the bottom 6 of the inner circumferential groove 4 has no flat portion, the entirety is curved at a substantially single radius of curvature. It is however, possible that the inner circumferential groove bottom includes a flat portion between a pair of curved portions. Further, it is possible for chamfering the corners to use an inclined straight line instead of a curved line so that the groove cross sectional shape consists of only straight lines.

The above-mentioned various sectional shapes and configurations for the circumferential grooves 3 (4 and 5) can be use alone or in combination in a tyre.

Test tyres of size 205/60R15 having the structure shown in Figs.1 and 2 and specifications shown in Table 1 were prepared. The test tyres were mounted on a 15X6JJ rim and inflated to 2.0 kgf/cm² and fitted to a test car and the following tests were made.

### 1. Test 1

### 1.1. Running noise test

According to JASO C-606 (microphone position 7.5 meter), the test car was coasted and the overall running noise (pass-by noise) therefrom was measured in dB(A). In Table 1, the results are indicated by a difference from a conventional tyre.

### 1.2. Aquaplaning performance

Running the test car on a wet road surface (water depth 5 mm, radius 100 meters, length 20 meters) and increasing stepwise the running speed, the lateral acceleration (lateral G) was measured. From the obtained data, the lateral G from 70 to 90 km/h was calculated. The results are indicated by an index based on that the conventional tyre is 100. The larger the value, the better the performance.

### 2. Test 2

Further, test tyres were prepared and the aquaplaning performance and pass-by noise were measured in the same manner as above. The test tyres had a tread pattern based on that of the conventional tyre in the above-mentioned test 1 but all the axial grooves of which were eliminated. The groove width ratio *m/n* of only the two inner circumferential grooves was changed by changing only the groove bottom width *m*. The test results are shown in Fig.8.

Furthermore, in the same manner as above, test tyres in which the groove width ratio *m/n* of only the two outer circumferential grooves was changed were prepared and tested. The test results are shown in Fig.9.

Through the tests 1 and 2, it was confirmed that the tyres according to the present invention satisfy the aquaplaning performance and pass-by noise. This is particularly apparent when the tyre according to the present invention is compared with the reference tyre 4 having the same groove volume.

**Table 1**

| | Convn | Ex. | Ref.1 | Ref.2 | Ref.3 | Ref.4 |
|---|---|---|---|---|---|---|
| Tread pattern | Fig.2 | | | | | |
| Half ground contacting width SW (mm) | 75 | | | | | |

| Inner circum. groove | | | | | | |
|---|---|---|---|---|---|---|
| Position L (mm) | 20 | | | | | |
| Ratio L/SW | 0.27 | | | | | |
| Top width n (mm) | 8 | 8 | 8 | 8 | 8 | 7.5 |
| Bottom width m (mm) | 4 | 3.2 | 4.8 | 3.2 | 4.8 | 3.75 |
| Ratio m/n | 0.5 | 0.4 | 0.6 | 0.4 | 0.6 | 0.5 |
| Depth GD (mm) | 8 | 8 | 8 | 8 | 8 | 8 |
| Corner radius (mm) | 0.5 | 0.5 | 0.5 | 0.5 | 0.5 | 0.5 |
| Sectional area (sq.mm) | 48 | 45 | 51 | 45 | 51 | 45 |

| Outer circum groove | | | | | | |
|---|---|---|---|---|---|---|
| Position L (mm) | 46 | | | | | |
| Ratio L/SW | 0.61 | | | | | |
| Top width n (mm) | 8 | 8 | 8 | 8 | 8 | 8.5 |
| Bottom width m (mm) | 4 | 4.8 | 3.2 | 3.2 | 4.8 | 4.25 |
| Ratio m/n | 0.5 | 0.6 | 0.4 | 0.4 | 0.6 | 0.5 |
| Depth GD (mm) | 8 | 8 | 8 | 8 | 8 | 8 |
| Corner radius (mm) | 0.5 | 0.5 | 0.5 | 0.5 | 0.5 | 0.5 |
| Sectional area (sq.mm) | 48 | 51 | 45 | 45 | 51 | 51 |

| Test results | | | | | | |
|---|---|---|---|---|---|---|
| Aquaplane (index) | 100 | 100 | 93 | 89 | 104 | 100 |
| Noise (dBa) | 0 | -0.3 | +0.1 | -0.9 | +0.7 | -0.1 |

## Claims

1. A pneumatic tyre comprising a tread portion (12) provided with a pair of axially outer circumferential grooves (5) and an axially inner circumferential groove (4), each extending continuously in the circumferential direction of the tyre, characterised in that the axially outer circumferential grooves (5) are disposed within a ground contacting width (*2 SW*) of the tread portion, and the axial distance *L* of the groove centre line thereof from the tyre equator is more than 0.4 times a half (*SW*) of the ground contacting width, the inner circumferential groove (4) is disposed such that the axial distance *L* of the groove centre line from the tyre equator is not more than 0.4 times a half (*SW*) of the ground contacting width, the ratio *m/n* of the axial widths *m* and *n* of the outer circumferential groove (5) at the groove bottom and top, respectively is more than 0.5 but not more than 1.0, the ratio *m/n* of the axial widths *m* and *n* of the inner circumferential groove (4) at the groove bottom and top, respectively is more than 0 but not more than 0.5.

2. A pneumatic tyre according to claim 1, characterised in that the top width *n* of the outer circumferential grooves (5) is in the range of from 3 to 20 % of a half ground contacting width *SW*, the groove depth of the outer circumferential grooves (5) is in the range of from 2.5 to 20 % of a half ground contacting width *SW*, the top width *n* of the inner circumferential groove (4) is in the range of from 3 to 20 % of a half ground contacting width *SW*, and the groove depth of the inner circumferential groove (4) is in the range of from 2.5 to 20 % of a half ground contacting width *SW*.

3. A pneumatic tyre according to claim 1 or 2, characterised in that the top width *n* of the outer circumferential grooves (5) is more than the top width *n* of the inner circumferential groove.

4. A pneumatic tyre according to claim 1, 2 or 3, characterised in that the axially outer and inner circumferential grooves (5,4) comprise straight grooves.

5. A pneumatic tyre according to claim 1, 2 or 3, characterised in that the axially outer and inner circumferential grooves (5,4) comprise a non-linear groove such as zigzag groove, wavy groove or square-wave groove.

6. A pneumatic tyre according to claim 1, 2, 3, 4 or 5, characterised in that the corners of the groove bottom (6) of the circumferential grooves are chamfered, but the corners between the groove sidewalls (7) and the tread surface are edged or sharp.

## Patentansprüche

1. Luftreifen, der einen Laufflächenabschnitt (12) umfaßt, der mit zwei axial äußeren Umfangsrillen (5) und einer axial inneren Umfangsrille (4) versehen ist, die sich jeweils kontinuierlich in der Umfangsrichtung des Reifens erstrecken, dadurch gekennzeichnet, daß die axial äußeren Umfangsrillen (5) innerhalb einer Bodenkontaktbreite (*2 SW*) des Laufflächenabschnitts angeordnet sind und die axiale Entfernung *L* der Rillenmittellinie von diesem von dem Reifenäquator größer als das 0,4-fache einer Hälfte (*SW*) der Bodenkontaktbreite ist, daß die innere Umfangsrille (4) derart angeordnet ist, daß die axiale Entfernung *L* der Rillenmittelinie von dem Reifenäquator nicht größer als das 0,4-fache einer Hälfte (*SW*) der Boderkontaktbreite ist, daß das Verhältnis *m/n* der axialen Breiten *m* und *n* der äußeren Umfangsrille (5) am Rillenboden bzw. der Rillenoberseite größer als 0,5 jedoch nicht größer als 1,0 ist, und daß das Verhältnis *m/n* der axialen Breiten *m* und *n* der inneren Umfangsrille (4) am Rillenboden bzw. der Rillenoberseite größer als 0 jedoch nicht größer als 0,5 ist.

2. Luftreifen nach Anspruch 1, dadurch gekennzeichnet, daß die Oberseitenbreite *n* der äußeren Umfangsrillen (5) im Bereich von 3 bis 20% der halben Bodenkontaktbreite *SW* liegt, daß die Rillentiefe der äußeren Umfangsrillen (5) im Bereich von 2,5 bis 23% einer halben Bodenkontaktbreite *SW* liegt, daß die Oberseitenbreite *n* der inneren Umfangsrille (4) im Bereich von 3 bis 20% einer halben Bodenkontaktbreite *SW* liegt, und daß die Rillentiefe der inneren Umfangsrille (4) im Bereich von 2,5 bis 20% einer halben Bodenkontaktbreite *SW* liegt.

3. Luftreifen nach Anspruch 1 oder 2, dadurch gekennzeichnet, daß die Oberseitenbreite *n* der äußeren Umfangsrillen (5) größer als die Oberseitenbreite *n* der inneren Umfangsrille ist.

4. Luftreifen nach Anspruch 1, 2 oder 3, dadurch gekennzeichnet, daß die axial äußeren und inneren Umfangsrillen (5, 4) gerade Rillen umfassen.

5. Luftreifen nach Anspruch 1, 2 oder 3, dadurch gekennzeichnet, daß die axial äußeren und inneren Umfangsrillen (5, 4) eine nicht gerade Rille, wie eine Zickzack-Rille, eine wellige Rille oder eine Rechteckwellen-Rille umfassen.

6. Luftreifen nach Anspruch 1, 2, 3, 4 oder 5, dadurch gekennzeichnet, daß die Ecken des Rillenbodens (6) der Umfangsrillen angefast sind, jedoch die Ecken zwischen den Rillenseitenwänden (7) und der Laufflächenoberfläche kantig oder scharf sind.

## Revendications

1. Pneumatique comprenant une partie (12) de bande de roulement ayant deux gorges circonférentielles axialement externes (5) et une gorge circonférentielle axialement interne (4), chacune étant disposée de façon continue dans la direction circonférentielle du pneumatique, caractérisé en ce que les gorges circonférentielles axialement externes (5) sont disposées sur la largeur (2SW) de contact avec le sol de la partie de bande de roulement, et la distance axiale L de l'axe central de gorge par rapport à l'équateur du pneumatique dépasse 0,4 fois la moitié (SW) de la largeur de contact avec le sol, la gorge circonférentielle interne (4) étant disposée afin que la distance axiale L de l'axe central de gorge par rapport à l'équateur du pneumatique ne dépasse pas 0,4 fois la moitié (SW) de la largeur de contact avec le sol, le rapport m/n des largeurs axiales m et n de la gorge circonférentielle externe (5) au fond de la gorge et à sa partie supérieure respectivement dépasse 0,5 mais ne dépasse pas 1,0, le rapport m/n des largeurs axiales m et n de la gorge circonférentielle interne (4) au fond et à la partie supérieure de la gorge respectivement étant supérieur à 0 mais ne dépassant pas 0,5.

2. Pneumatique selon la revendication 1, caractérisé en ce que la largeur à la partie supérieure n des gorges circonférentielles externes (5) est comprise entre 3 et 20 % de la demi-largeur SW de contact avec le sol, la profondeur des gorges circonférentielles externes (5) est comprise entre 2,5 et 20 % de la moitié de la largeur de contact avec le sol SW, la largeur de la partie supérieure n de la gorge circonférentielle interne (4) est comprise entre 3 et 20 % de la demi-largeur de contact avec le sol (SW) et la profondeur de la gorge circonférentielle interne (4) est comprise entre 2,5 et 20 % de la demi-largeur de contact avec le sol SW.

3. Pneumatique selon la revendication 1 ou 2, caractérisé en ce que la largeur n de la partie supérieure des gorges circonférentielles externes (5) dépasse la largeur n de la partie supérieure de la gorge circonférentielle interne.

4. Pneumatique selon la revendication 1, 2 ou 3, caractérisé en ce que les gorges circonférentielles axialement externes et internes (5, 4) sont des gorges rectilignes.

5. Pneumatique selon la revendication 1, 2 ou 3, caractérisé en ce que les gorges circonférentielles axialement externes et internes (5, 4) comportent une gorge non linéaire, par exemple en zig-zag, sinueuse ou à décalage rectangulaire.

6. Pneumatique selon la revendication 1, 2, 3, 4 ou 5, caractérisé en ce que les coins du fond (6) des gorges circonférentielles sont chanfreinés, mais les coins compris entre les parois latérales (7) des gorges et la surface de la bande de roulement ont un bord ou sont nets.
